# EUROPEAN PATENT SPECIFICATION

(11) **EP 0 937 306 B1**
(45) Date of publication and mention of the grant of the patent: **25.04.2001**
(21) Application number: 97939030.9
(22) Date of filing: 05.09.1997
(51) Int. Cl.: H01H 5/02

(54) **ROCKER ARRANGEMENT**
WIPPTASTENANORDNUNG
ENSEMBLE INTERRUPTEUR A BASCULE

(30) Priority: 14.09.1996 GB 9619253
(43) Date of publication of application: 25.08.1999
(73) Proprietor: ASHLEY & ROCK LIMITED, Ulverston Cumbria LA12 9BN (GB)
(72) Inventor: GARTON, Stephen, David, Osterley Middlesex TW7 4QJ (GB)
(74) Representative: McNeight, David Leslie
(86) International application number: GB9702376
(87) International publication number: WO9811575

(56) References cited:
- DE-A- 2 658 264
- US-A- 3 193 642
- K.A.LENNON: "Spring and magnet keyboard actuator" IBM TECHNICAL DISCLOSURE BULLETIN, vol. 24, no. 8, January 1982, NEW YORK (US), pages 4314-4315, XP002046292

## Description

This invention relates to rocker arrangements for actuators such for example as electric switches, and to actuators incorporating such rocker arrangements as well as to systems such as electric switching systems embodying such rocker arrangements in actuators.

Arrangements have been proposed for "wireless" remote switching of electrical appliances such as lighting in which a switch sends a signal to a remote device such as a lampholder, which comprises a signal receiver to switch the lamp on and off. One such arrangement involves a radio signal sent from a remote switch to a radio receiver, and such systems are used for light switching and/or door locks in automobiles.

The usual such arrangement involves a battery in the switch device to provide the operating power to generate the signal. In the case of a wall switch for lighting this avoids the use of power wiring from the switch, which saves on installation costs, but necessitates provision for battery renewal and carries the problem of non-functionality on battery exhaustion until a replacement is found and substituted.

It has been suggested to avoid the need for a battery in such arrangements by using the energy input on depression of a switch member to convert with radio (or, indeed, either, transmittable) energy. One problem is how to do this in the most efficient manner; another is that of defining the switching operation and integrating a switch into a circuit or a plurality of circuits so as to associate each switch with a particular lamp or other device to avoid spurious switching and to accommodate complex circuits such as two - and three-way switching circuits. An earlier attempt to provide a rocker arrangement for an actuator, comprising a pivoted rocker with an attracting magnetic part, is disclosed in DE-A-2658264.

The invention provides a rocker arrangement and an actuator such as an electric signalling switch including the same which are not particularly suitable for serving the problems mentioned above.

The invention, in one aspect, comprises a rocker arrangement for an actuator, comprising :
a pivoted rocker;
a spring maintaining the rocker in a first position;
the rocker and spring having mutually attracting magnetic parts which are in contact in said first position;
the rocker and spring being so designed and arranged that depression of the rocker about its pivot moves the spring resiliently so that the magnetic parts separate with a snap action.

The spring may be a leaf-spring having its magnetic part at one end of the rocker, so that on depression about its axis, it flexes the spring and then makes additional contact with the spring at a fulcrum spaced from the said end, the magnetic part of the spring then pivoting away from the magnetic part of the rocker. The spring is then free to vibrate after the magnetic parts separate. The spring may carry a magnet, the rocker comprising an armature, e.g. of soft iron or like magnetisable material.

The magnet vibrating on the spring can if it is then in or close to a coil, induce an electric current in the coil which can be utilised for actuation purposes, and the arrangement may emit a radio signal as a resulting separation of the magnetic parts leading to such vibration in or adjacent a coil to induce an alternating electric current in the coil. The radio signal may then be generated by a square wave pulse generator and an encoder.

A particularly efficient and cost-effective mechanical arrangement has the spring in the form of a yoke having a pair of arms extending away from anchorage points and a cross member joining the arms remote from their anchorage points and a central arm member extending from said cross member back towards said anchorage points between said pair of arms. the end of that central arm member is arranged to carry the magnet and has a cutaway portion so the one pole face of the magnet is exposed for contact by a keeper comprised in the rocker. The whole may be contained in a housing, e.g. of plastics material, having the general appearance of a wall light switch.

The action of this arrangement is simply that it generates a signal on depression of the rocker. The power is low as the generation of current in the coil clamps the oscillation. Releasing the rocker does not give rise to any vibration and hence no unwanted signal is generated - the magnet is simply attracted towards the keeper, where it is in any event propelled by the resilience of the spring.

A device such as a lamp arranged for actuation by the switch arrangement emitting a single coded pulse train upon each actuation is especially adapted both for single and more complex, e.g. two-way and three-way switching arrangements, where two or three switches are connected to a single lamp. It is only necessary to associate a radio receiver - a simple circuit comprising a pick-up, amplifier, rectifier and go-no-go arrangement operating on receipt of a correctly coded signal but not otherwise - in a toggle arrangement in which a first signal turns the lamp or other appliance on, the next off, and so on. A two-way switching arrangement is then easily mimicked by arranging two identically coded switches at the desired locations so that a signal from either turns the appliance on if it is off and off if it is on. However, it may be preferred to use switches differently coded (to avoid the necessity to find two the same when switches are being produced in bulk with different codes, albeit that because of the availability of codes there will be replication) and in that event, the receiver can be arranged to "listen" for three instances of the same code broadcast in quick succession in a training mode so that it toggles each time thereafter that code is received, and more than one code, perhaps three or even more can be accepted as viable for that receiver. For security purposes, the receiver can be locked out of training mode.

It may be arranged that in training mode the light or other appliance is not activated, but that a visual e.g. an l.e.d. signal is given confirming receipt of a code being assigned to non-volatile memory for the life of the receiver or until intentionally erased. Training mode may be terminated on receipt of a single, non-repeated code.

The invention also comprises an actuator arrangement generating a signal for transmission to a remote receiver the signal being broadcast so that it may be picked up by more than one receiver and being in two part coded form one part being a signature code so as to actuate only a receiver or receivers similarly coded and the other part comprising a function code causing said receiver or receivers to perform an operation or a selected one of a set of operations.

The invention further comprises a switching arrangement for multi-way control of lamps or other appliances comprising switches transmitting to the appliance coded signal comprising a toggle signal and a control signal operative to control the appliance when toggled ON by the toggle signal.

One embodiment of a rocker arrangement and a switch and contact arrangement embodying the same, all secondary to the invention, will now be described with reference to the accompanying drawings, in which :
- Figure 1: is an exploded view of an actuator;
- Figure 2: is a section showing the rocker depressed;
- Figure 3: is a section like Figure 2, showing the rocker in its rest position (solid line) and depressed (broken line);
- Figure 4: is a diagrammatic illustration of an arrangement for a lamp using switches as illustrated in Figures 1 to 3;
and
- Figure 5: is a diagrammatic circuit arrangement within the actuator for generating a signal pulse train, showing signal traces at various stages of the circuit.

The drawings illustrate a rocker arrangement 11 for an actuator 12 - in this case a remote control electric switch.

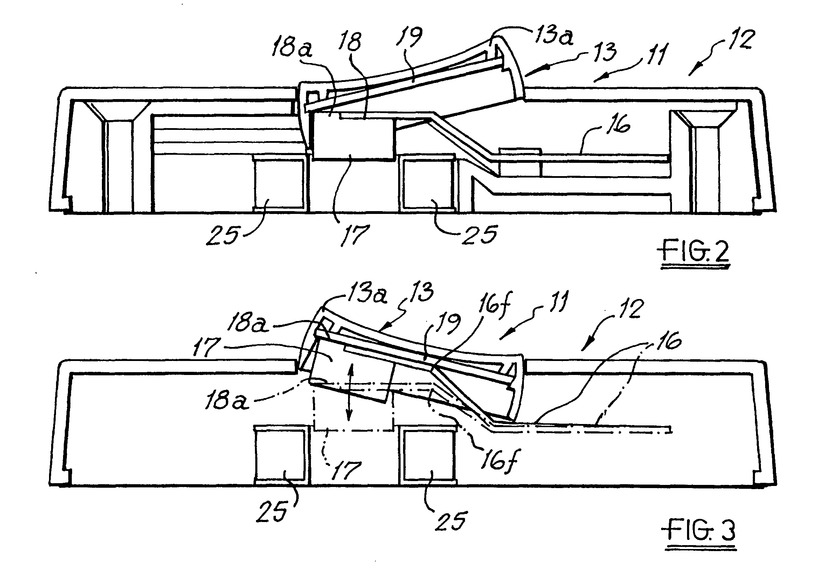

The arrangement comprises a rocker 13 pivoted by spigots 14 in bearings 15 and a spring 16 maintaining the rocker in a first, rest position as illustrated in solid line in Figure 3.

The rocker 13 and spring 16 have mutually attracting magnetic parts. The spring 16 carries a magnet 17 of which a raised land 18a of the pole face 18 is flush with the upper surface (as seen in Figures 2and 3) of the spring 13. The rocker 13 has a soft iron keeper 19 snap-fitted into the plastic moulding part 13a of the rocker 13. In the rest position of Figures 2 and 3 the land 18a and the keeper 19 are in contact.

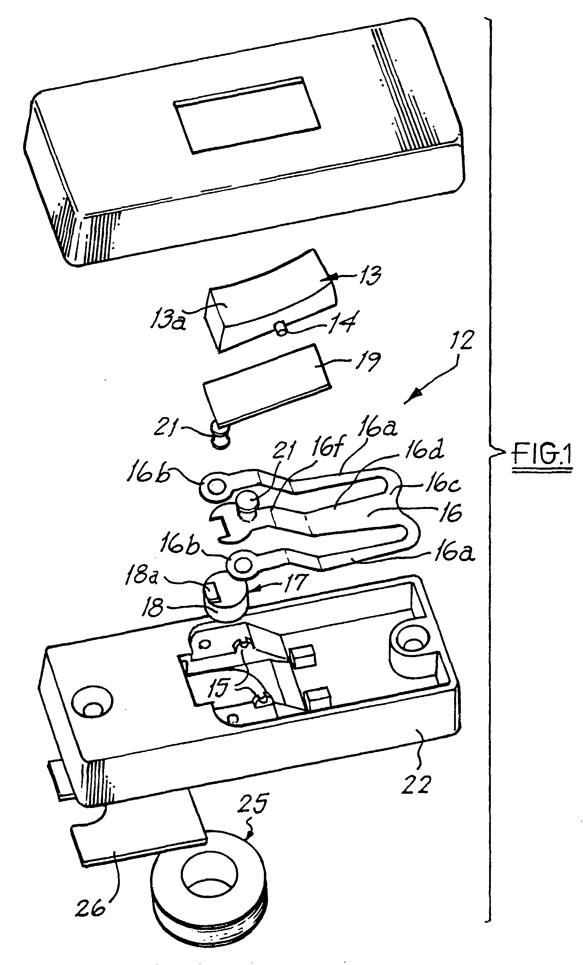

The general design of the spring 16 will be more readily apparent from the exploded view of Figure 1. It is in the form of a yoke having a pair of arms 16a extending away from anchorage points 16b where it is secured by studs 21 to the plastic moulded, zinc die cast or other form of switch base 22, which is provided with the usual wall mounting operatives 23 and a cover 24 which is a snap fit on the base. The arms 16a are joined by a cross member 16c remote from the anchoring points 16b and a central arm member 16d extends from the cross member 16c back towards the anchoring points 16b between the arms 16a. The magnet 17 is carried, as by adhesive, on the free end of the central arm member 16d. All three arm members 16b, 16d are cranked and in particular arm member 16d is formed with a fulcrum 16f.

As the rocker 13 is depressed, the keeper 19 at first pulls up the land 18a of the pole face 18 of the magnet 17 but at a point roughly mid-way through its permitted travel the keeper 19 engages the fulcrum 16f of the contact arm member 16d of the spring 16 and forces the mutually attracting magnet 17 and keeper 19 apart with a snap action.

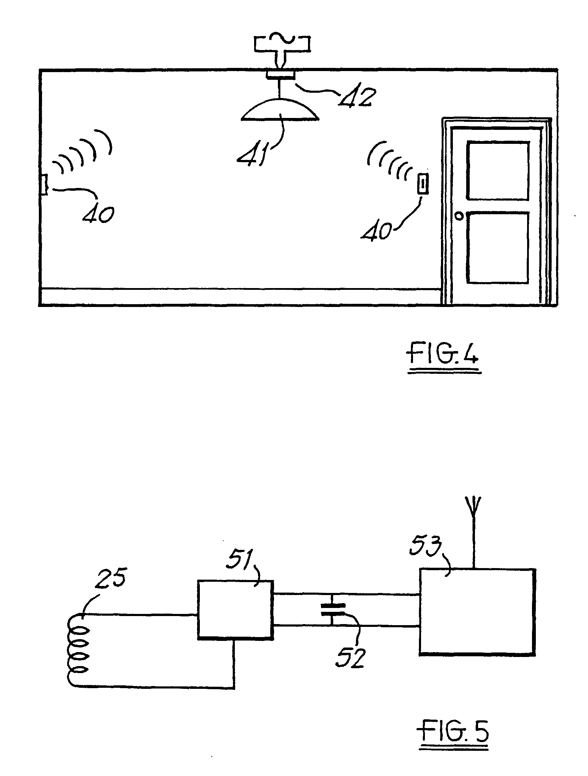

This is per se a particularly advantageous rocker mechanism giving a positive indication through touch and possibly sound that the rocker 13 has been depressed to a sufficient extent to achieve a desired switching or other operation according to the requirements of the actuator. In the present embodiment, however, it has the further useful effect of setting the spring 16 in vibration as in Figure 3 and, in particular, the magnet 17. Because of the magnetic attraction between the magnet 17 and the keeper 19 lifting the spring and magnet to flex the spring, and because of the mass of the magnet, a useful amount of energy is carried by the vibrating spring 16 and this is utilised by the magnet 17 vibrating in or close to a coil 25 carried in the base 22 which results in an alternating current in the coil 25. This alternating current is used to generate a coded radio signal which can be used as illustrated in Figure 4 to control a lamp 41.

In Figure 4, two switches 40 are shown, which could, for example, be on opposite walls of a room or at opposite ends of a corridor having a central light fitting 42 which includes a radio receiver, powered by the mains supply to the lamp 41, which responds to the coded signal from either switch 40 to toggle the lamp 41 on and off. Such an arrangement - which could be extended to three or even more switches - saves the high installation costs of conventional multi-wiring switching circuits.

In the base 22 is also carried a miniature circuit board 26 connected to receive the current output of the coil 25. This current output will consist of a sinusoidal wave form that will, because of the energy in the spring 16 and magnet 17, survive over a useful number of cycles before the energy dissipates and the vibration ceases. The circuit is shown diagrammatically in Figure 5, which also shows the nature of the signal at stages in the circuit. The coil 25 is connected to a rectifier 51 that charges up a condenser 52 which powers a square wave pulse generator and encoder 53 which generates a coded signal which is broadcast as a radio transmission from the switch which can be received by the receiver in the fitting 42.

The code can be factory set and indicated on the circuit board, but there may be provided switches on the circuit board for modifying the pulse train output, for example to change the pulse train in the event of interference from a nearby transmitter or to add a feature such as dimming.

The switches can be sold together with a receiver pre-tuned to the present pulse train output or the receiver can be trainable to respond to a pulse train first emitted to it, either by having a set of switches that can be adjusted to suit the known pulse train of a switch or by having an automatic training circuit that locks on to the first received pulse train.

In one coding arrangement, a switch emits a two-part code, a first, 16 bit, part which comprises the signature specific to the switch (which a receiver is taught, as mentioned above) and a second, 5 bit, part which contains a function code. This function code may be pre-programmed or alterable by a user, and extends the operations of which a switch is capable. The first bit of the function code may be an ON/OFF toggle, the next four bits representing a dimming level, and might be changed using a potentiometer with an adjustment on the face of the switch.

If in such arrangement the same lamp is operated by two separate switches, since the first function bit is a toggle, the arrangement becomes a two-way dimmer switch, which is not actually feasible using hard wired, conventional arrangements, dimming control being achievable from either switch.

In a simple arrangement, the dimmer control is adjusted before the toggle action - i.e. the potentiometer is adjusted before the ON/OFF switch. The lamp "remembers" the most recent setting. It would, however, be possible to arrange that the ON/OFF switch can be operated first, the dimmer control thereafter sending the 16 bit identification signature with no toggle bit followed by a new four bit level code.

Other functions can be ascribed to the function code : for example, an ON duration may be set - useful in stairways and corridors of blocks of flats.

The system lends itself to more flexible control of lights even than two, three or more way switching, with or without dimmers. For example, a single switch may be arranged to turn a plurality of lights on, for example when entering a dark house, for subsequent switching off one by one, or to turn all "on" lights off, for example on leaving premises.

The switches may also be used, with or without ancillary control, for other appliances, such as extractors, fans, kettles, television and video sets, garage doors, computers and alarm systems.

The coding arrangements are particularly suited to switches and other actuators which generate their own transmitting power according to the invention, but may also be incorporated in other, e.g. conventional, switching and actuating arrangements which may operate together with self-generating actuators of the invention or even independently, but so as to permit of self-generating actuators being added-on as additional or portable actuators and controllers.

The arrangement is not restricted to the use of radio transmission. Wiring can be used and may be effective over longer distances - although it would appear at first sight to negate the advantages of a radio arrangement, a wired system can still have advantages over conventional systems in that the wiring is simpler and low voltage. Given sufficient power - which is a function of the effort required to depress the rocker, other forms of transmission, e.g. ultrasound, infra-red and so on could be used - an IR laser could communicate over quite large distances if the beam could be properly aimed at the receiver.

Switches incorporating the invention can be used safely in hazardous environments - no arcing will rise at the switch - and in bathrooms, for example, as there is no possibility of electric shock from the low powers and voltage involved.

## Claims

1. A rocker arrangement (11) for an actuator (12), including a pivoted rocker (13) having an attracting magnetic part (19),
characterised in that:
the rocker arrangement (11) additionally includes a spring (16) maintaining the rocker (13) in a first position, the rocker (13) and spring (16) having mutually attracting magnetic parts (17, 19) which are in contact in said first position; and
the rocker (13) and spring (16) are so designed and arranged that depression of the rocker about its pivot (14) moves the spring resiliently so that the magnetic parts (17,19) separate with a snap action.

2. An arrangement according to claim, 1 in which the spring is a leaf spring having its magnetic part at one end and the rocker, on depression about its axis flexes the spring and then makes additional contact with the spring at a fulcrum spaced from the said end, the magnetic part of the spring then pivoting away from the magnetic part of the rocker.

3. An arrangement according to claim 1 or claim 2, in which the spring is free to vibrate after the magnetic parts separate.

4. An arrangement according to any one of claims 1 to 3, in which the spring carries a magnet and the rocker comprises a keeper.

5. An arrangement according to claim 4, in which the magnet vibrates on the spring in relation to a coil whereby to induce an alternating electric current in the coil.

6. An arrangement according to any one of claims 3 to 5, which emits a radio signal as a result of separation of the magnetic parts.

7. An arrangement according to claim 6, in which the radio signal is generated by a square wave form pulse generator and an encoder.

8. An arrangement according to any one of claims 1 to 6, in which the spring is in the form of a yoke having a pair of arms extending away from anchorage points and a cross member joining the arms remote from their anchoring points and a central arm member extending from said cross member back towards the anchoring points between said pair of arms.

9. An arrangement according to any one of claims 1 to 7, contained in a housing.

## Patentansprüche

1. Wipptastenanordnung (11) für ein Betätigungsglied (12), enthaltend eine schwenkbare Wippe (13) mit einem anziehenden magnetischen Teil (19),
**dadurch gekennzeichnet**,
daß:
die Wipptastenanordnung (11) enthält zusätzlich eine Feder (16), die die Wippe (13) in einer ersten Stellung hält, wobei die Wippe (13) und die Feder (16) gegenseitig anziehende magnetische Teile (17, 19) haben, die in der ersten Stellung miteinander in Kontakt sind; und
die Wippe (13) und die Feder (16) sind so ausgebildet und angeordnet, daß ein Niederdrücken der Wippe um ihre Schwenkachse (14) die Feder elastisch bewegt, so daß die magnetischen Teile (17, 19) sich durch einen Schnappvorgang trennen.

2. Anordnung nach Anspruch 1, bei welcher die Feder eine Blattfeder ist, die ihr magnetisches Teil an einem Ende hat, und die Wippe beim Niederdrücken um ihre Schwenkachse die Feder biegt und dann einen zusätzlichen Kontakt mit der Feder an einem im Abstand von diesem Ende angeordneten Drehpunkt bewirkt, wobei das magnetische Teil der Feder dann von dem magnetischen Teil der Wippe weggeschwenkt wird.

3. Anordnung nach Anspruch 1 oder Anspruch 2, bei welcher die Feder frei zum Schwingen ist, nachdem die magnetischen Teile sich getrennt haben.

4. Anordnung nach einem der Ansprüche 1 bis 3, bei welcher die Feder einen Magneten trägt und die Wippe einen Magnetanker aufweist.

5. Anordnung nach Anspruch 4, bei welcher der Magnet auf der Feder vibriert in Beziehung auf eine Spule, um hierdurch einen elektrischen Wechselstrom in der Spule zu erzeugen.

6. Anordnung nach einem der Ansprüche 3 bis 5, welche ein Funksignal als ein Ergebnis der Trennung der magnetischen Teile aussendet.

7. Anordnung nach Anspruch 6, bei welcher das Funksignal durch einen Generator von Impulsen mit Rechteckwellenform und einen Codierer erzeugt wird.

8. Anordnung nach einem der Ansprüche 1 bis 6, bei welcher die Feder die Form eines Jochs hat mit einem Paar von Armen, die sich von Ankerpunkten weg erstrecken, und einem Querträger, der die Arme entfernt von ihren Ankerpunkten verbindet, und einem mittleren Armglied, das sich von dem Querträger zurück zu den Ankerpunkten zwischen dem Paar von Armen erstreckt.

9. Anordnung nach einem der Ansprüche 1 bis 7, die in einem Gehäuse aufgenommen ist

## Revendications

1. Ensemble à culbuteur (11) destiné à un organe de manoeuvre (15) et comprenant un culbuteur pivotant (13) possédant une partie magnétique d'attraction (19),
caractérisé en ce que
l'ensemble à culbuteur (11) comporte en outre un ressort (16) qui maintient le culbuteur (13) dans une première position, le culbuteur (13) et le ressort (16) ayant des parties magnétiques (17, 19) qui s'attirent mutuellement et qui sont en contact dans la première position, et
le culbuteur (13) et le ressort (16) sont réalisés et disposés de manière que l'enfoncement du culbuteur autour de son pivot (14) déplace élastiquement le ressort si bien que les parties magnétiques (17, 19) se séparent avec un effet de déclenchement.

2. Ensemble selon la revendication 1, dans lequel le ressort est un ressort à lame ayant une partie magnétique à une première extrémité, et le culbuteur, lors de son enfoncement autour de son axe, fait fléchir le ressort, puis exécute un contact supplémentaire avec le ressort à un pivot distant de ladite extrémité, la partie magnétique du ressort pouvant alors s'écarter par pivotement de la partie magnétique du culbuteur.

3. Ensemble selon la revendication 1 ou 2, dans lequel le ressort est libre de vibrer après que les parties magnétiques se sont séparées.

4. Ensemble selon l'une quelconque des revendications 1 à 3, dans lequel le ressort porte un aimant et le culbuteur est un organe d'armature.

5. Ensemble selon la revendication 4, dans lequel l'aimant vibre sur le ressort en coopération avec un enroulement de manière qu'il induise un courant électrique alternatif dans l'enroulement.

6. Ensemble selon l'une des revendications 3 à 5, qui émet un signal à hautes fréquences à la suite de la séparation des parties magnétiques.

7. Ensemble selon la revendication 6, dans lequel le signal à hautes fréquences est créé par un générateur d'impulsions de forme rectangulaire et par un codeur.

8. Ensemble selon l'une quelconque des revendications 1 à 6, dans lequel le ressort est sous forme d'un étrier ayant deux bras s'écartant de points d'ancrage, un organe formant traverse raccordant les bras à distance des points d'ancrage, et un organe de bras central s'étendant depuis l'organe formant traverse pour revenir vers les points d'ancrage entre les deux bras.

9. Ensemble selon l'une quelconque des revendications 1 à 7, contenu dans un boîtier.
